# EUROPEAN PATENT SPECIFICATION

(11) **EP 1 690 035 B1**
(45) Date of publication and mention of the grant of the patent: **28.07.2010**
(21) Application number: 04797418.3
(22) Date of filing: 02.11.2004
(51) Int. Cl.: F16M 13/00, H05K 5/02

(54) **A FRICTION ELEMENT**
REIBELEMENT
ELEMENT DE FROTTEMENT

(30) Priority: 07.11.2003 DK 200301658
(43) Date of publication of application: 16.08.2006
(73) Proprietor: Ergonomic Solutions International Limited, Epsom Surrey KT19 9QQ (GB)
(72) Inventor: DALUM, Morten,c/o HD-Design A/S, DK-9400 Noerresundby (DK)
(74) Representative: Larsen, Hans Ole
(86) International application number: PCT/DK2004/000756
(87) International publication number: WO 2005/045300

(56) References cited:
- EP-A- 0 545 867
- DE-U1- 9 408 998
- DE-U1- 20 216 250
- US-A- 2 091 010
- US-A- 2 914 275
- US-A- 3 197 169
- US-A- 4 691 887
- US-A- 5 813 638
- US-A- 5 915 572
- US-A1- 2004 166 910
- US-B1- 6 176 457

## Description

The invention relates to a friction element for the mounting of terminals, e.g. payment terminals or other electronic hardware.

For the mounting of payment terminals, it is known to use a metal plate with a bent edge in connection with which the terminal itself is positioned. The bent edge is subsequently lacquered and friction rubber is applied thereon to secure the terminal. The friction itself is thus created by the precision of the bent edges as well as the friction rubber which is applied subsequently.

An essential drawback of the known friction element, however, is that the friction is dependent on the precision of the metal edge, as the rubber per se is not capable of absorbing the tolerances which occur in connection with the bending of the edge. The force to be applied to insert and remove the payment terminal therefore varies, as it depends on the tolerances with which the metal plate and the bent edge are manufactured.

It is generally known to equip friction elements, which are to secure an object which is e.g. inserted into a holder, with slats which may partly yield at the insertion of the object and may partly serve as a kind of barb against unintentional withdrawal. Such friction elements for use in the securing of electronic hardware, such as a mobile phone, in a holder where the friction element has slats on the side facing the phone, are described in US Patent No. 6 176 457.

These known friction elements have slats whose cross-section is constant along their entire extent. This means that the friction element, if it is to have a certain size, e.g. for securing a relatively large object such as a payment terminal, is difficult to manufacture and also susceptible to cracking in the slats.

Accordingly, the object of the present invention is to provide a friction element with slats of the said type, which solves the above-mentioned problems, said friction element being simultaneously unique in that, when mounting e.g. a payment terminal, it results in an ergonomically correct position of precisely the payment terminal, which complies with the physiological characteristics of various people.

This object is solved by a friction element of the type stated in the opening paragraph, where the cross-section of the slats decreases toward the ends of the slats seen from a line, said line extending perpendicularly to the longitudinal extent of the slat and in parallel with the front face of the friction element.

It is moreover ensured that the manufacture by moulding is simpler, as it is easier to get the object out of the mould when the extent of the slats decreases toward the ends.

The said line need not necessarily be disposed in the central plane of the friction element, but may be displaced, as stated in claim 2. By allowing it to coincide with the dividing plane of the mould, as stated in claim 3, a special advantage in terms of production is achieved.

Claim 4 ensures resilience or flexibility of the slats, as the upper and lower sides of the slat are essentially parallel.

Claims 5 and 6 ensure that at least one of the sides of the slats forms an inclined angle with the front face, whereby the securing ability of the slats in the securing direction is greater than the securing ability in the insertion direction of the terminal.

Claim 7 ensures that the risk of beginning cracking at the apex of the angle between the front face and the underside of the individual slat is minimized, as the transition between the front face and the lower sides of the slats is rounded. It also gives the slats a greater securing ability.

Claims 8 and 9 define embodiments which are expedient for arranging and securing the friction element on a mounting plate for e.g. payment terminals.

To secure the friction element additionally, one or more pins may advantageously be arranged on at least one of the outer sides of the metal plate which may engage the sides of the friction element.

The provision of a friction element according to the invention will provide a more uniform product and an improved manufacturing method because of the slats, as the accuracy of the bent edge has been made insignificant. This results in an optimization of the manufacturing method, thereby minimizing the costs.

The friction element is typically made of thermoplastic rubber.

The invention will now be explained more fully with reference to the drawing, in which
- fig. 1: shows a friction element according to the invention in perspec- tive,
- fig. 2: shows the friction element shown in fig. 1, seen from above,
- fig. 3: shows a sectionally divided cross-section along the line A-A of the friction element shown in figure 2,
- fig. 4: shows a detailed view of a slat, and

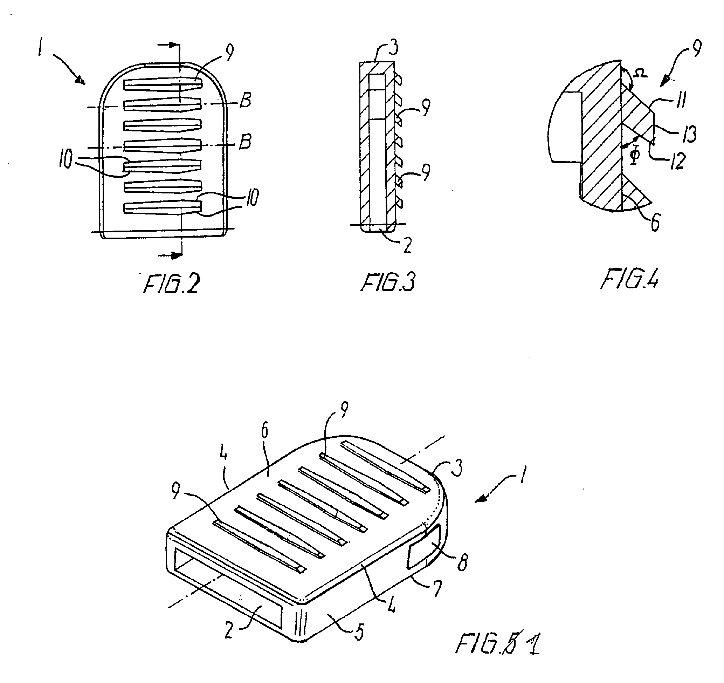

Figure 1 shows a friction element 1 according to the invention for the mounting of e.g. payment terminals. In this exemplary embodiment, the friction element 1 comprises two essentially U-shaped faces, a front face 6 as well as a rear face 7 defined by a curve part 3 as well as two long sides 4, said long sides 4 being positioned symmetrically around the centre line C of the friction element 1.

The front face 6 and the rear face 7 are held together on their respective long sides 4 by a side face 5 which extends along the long sides 4 and the curve part 3, thereby providing a hollow voluminous friction element 1, where the open U-part constitutes the opening 2 of the friction element.

Adjoining the curve part 3 and symmetrically on each side of the centre line C of the friction element, a bore 8 is provided in the side face 5, said bore having direct access to the hollow. In this exemplary embodiment, the bores 8 are rectangular and positioned symmetrically between the front face 6 and the rear face 7, but another position and configuration are possible.

Projections in the form of slats 9 are provided on the front face 6 of the friction element. These slats 9 will be described in more detail in connection with figures 2-4, it being merely noted that the friction element 1 including slats 9 is made of thermoplastic rubber, which is thus both elastic and wear-resistant at one and the same time. However, other elastic materials are also conceivable.

The friction element 1 described above is positioned on a metal plate which can assume a shape similar to or different from that of the friction element 1. The metal plate comprises a face with a bent edge, and this edge is placed in/inserted into the opening 2 of the friction element 1. The actual face of the metal plate thus serves as a support for the rear face 7 of the friction element 1.

In the event that the metal plate comprises pins on its outer sides, these may be used as an additional securing or attachment of the friction element 1, as these pins can engage the bores 8 of the friction element. Subsequently, the terminal itself is placed on the metal plate, and the slats 9 will thus be positioned between the edge of the terminal and the metal edge and compensate for tolerance and thereby spread the force which has to be applied to insert and remove the terminal. The front face 6 may thus be characterized as an "active" face, and the rear face 7 may correspondingly be characterized as a "passive" face.

The friction element 1, however, may conceivably be given another configuration than the one described above, just as it may conceivably be made solid so that the opening 2 and the bores 8 are provided by drilling. It is essential to the invention that the friction element 1 has projections on its front face 6 which provide the required friction.

Figure 2 shows the friction element 1 seen from above, that is from the front face 6 with the arranged projections in the form of slats 9. As will appear from the figure, the slats 9 are arranged as "ribs" with the same mutual spacing (see figure 3). In this exemplary embodiment, the slats 9 are additionally positioned such that their respective centre lines B are essentially perpendicular to the centre line C of the friction element (see also figure 1). The number of slats 9 may vary, just as the height relative to the front face 6 may be the same or vary along and/or transverse to the centre line B of the slats, and may thus be given individual functions.

Each slat 9 is defined longitudinally of the centre line B and on both sides thereof by side delimitations 10, each of which takes its basis on the line A-A and converges away from it longitudinally of the centre line B. Each slat 9 is thus symmetrical around the centre line B, but asymmetrical relative to the centre line C of the friction elements or the line A-A. The shape of the slats 9, however, is not restricted to this configuration, but may be configured with the dividing face from the mould at another location, e.g. at the centre. In this exemplary embodiment, the line A-A has been selected as the basis, as this line coincides with the assembly line of the mould. However, the invention is not restricted to this embodiment, but may be formed with the dividing face from the mould at another location, e.g. at the centre. However, important advantages are achieved by placing the line A-A so that this coincides with the moulding line, as it is easier to get the friction element 1 out of the mould.

As will appear from figure 3, which shows a sectionally divided cross-section along the line A-A of the friction element 1 shown in figure 2, each slat 9 is inclined in a direction from the curve part 3 toward the opening 2. As will appear more clearly from figure 4, which shows a detailed view of one of the slats 9 shown in figure 3, the individual slat 9 comprises an upper inclined plane 11, a lower inclined plane 12 as well as a termination plane 13, which is essentially parallel-displaced relative to the front face 6 of the friction element. The upper inclined plane 11 forms an obtuse angle Ω with the front face 6 of the friction element, while its lower inclined plane 12 forms an acute angle Φ.

The configuration of the slats 9 is not fixed, as, in principle, they can assume any shape, e.g. such that the upper and lower inclined planes 11, 12 are parallel. However, it is essential to the invention that the slats 9 are shaped in such a manner as to provide a barb effect which manifests itself by a great resistance to occurring force and/or pressure impacts and absorbs tolerances on the basis thereof. An additional advantage of the configuration stated above is the saving of materials, thereby minimizing the costs.

The transition between the upper inclined plane 11 and the termination plane 13 may also be configured as a rounded transition to facilitate the insertion of the terminal, while maintaining the securing effect on the terminal.

As already mentioned, the friction element 1 is made of thermoplastic rubber, but when relatively rigid materials are used, it will be an advantage that the transition between the front face 6 of the friction element and the lower inclined plane 12 is curved (illustrated in dashed line in figure 4) and thus causes relief in the material and thereby minimizes the risk of cracking in connection with the insertion and removal.

## Claims

1. A friction element for detachable securing of terminals, e.g. payment terminals or other electronic hardware, where the friction element (1) on the front face (6) comprises a plurality of slats (9) **characterized in that** the cross-section of the slats (9) decreases toward the ends of the slats (9) seen from a line (A-A), said line (A-A) extending perpendicularly to the longitudinal extent of the slats (9) and in parallel with the front face (6).

2. A friction element according to claim 1, **characterized in that** the line (A-A) extends in parallel with the centre line (C), of the entire element, but displaced at a distance from it.

3. A friction element according to claim 2, **characterized in that** the line (A-A) coincides with the moulding line of the friction element (1).

4. A friction element according to claim 1, **characterized in that** the upper and lower sides (11, 12) of the slats (9) are essentially parallel.

5. A friction element according to claim 1 or 4, **characterized in that** at least one of the upper or lower sides (11, 12) of the slats (9) forms an obtuse angle (Ω, Φ) with the front face (6).

6. A friction element according to claim 5, **characterized in that** the lower side (12) of the slats (9) forms an acute angle (Φ) with the front face (6).

7. A friction element according to claim 6, **characterized in that** the transition between the front face (6) and the lower sides (12) of the slats (9) is rounded.

8. A friction element according to claims 1 - 3, **characterized in that** the friction element (1) comprises sides (3, 4, 5, 6, 7), forming a cavity, said cavity can receive a mounting plate completely or partly.

9. A friction element according to claim 8, **characterized in that** the friction element (1) comprises one or more bores or recesses (8) for receiving a pin or barbs to secure the friction element (1) to a mounting plate.

## Patentansprüche

1. Reibelement für die lösbare Anbringung von Endgeräten, wie etwa Bezahlendgeräten oder anderer elektronischer Hardware, wobei das Reibelement (1) auf der Vorderseite (6) eine Vielzahl von Lamellen (9) enthält, **dadurch gekennzeichnet, dass** der Querschnitt der Lamellen (9) zu den Enden der Lamellen (9), von einer Linie (A-A) aus betrachtet, abnimmt, wobei diese Linie (A-A) senkrecht zur Längsausdehnung der Lamellen (9) und parallel zur Vorderseite (6) verläuft.

2. Reibelement nach Anspruch 1, **dadurch gekennzeichnet, dass** die Linie (A-A) parallel zur Mittellinie (C) des gesamten Elementes verläuft, jedoch in einem Abstand zu dieser versetzt ist.

3. Reibelement nach Anspruch 2, **dadurch gekennzeichnet, dass** die Linie (A-A) mit der Ausformungsrichtung des Reibelementes (1) übereinstimmt.

4. Reibelement nach Anspruch 1, **dadurch gekennzeichnet, dass** die Ober- und die Unterseite (11, 12) der Lamellen (9) im wesentlichen parallel sind.

5. Reibelement nach Anspruch 1 oder 4, **dadurch gekennzeichnet, dass** die Ober- und/oder die Unterseite (11, 12) der Lamellen (9) einen stumpfen Winkel (Ω, Φ) mit der Vorderseite (6) ausbilden.

6. Reibelement nach Anspruch 5, **dadurch gekennzeichnet, dass** die Unterseite (12) der Lamellen (9) einen spitzen Winkel (Φ) mit der Vorderseite (6) ausbildet.

7. Reibelement nach Anspruch 6, **dadurch gekennzeichnet, dass** der Übergang zwischen der Vorderseite (6) und den Unterseiten (12) der Lamellen (9) abgerundet ist.

8. Reibelement nach Anspruch 1 bis 3, **dadurch gekennzeichnet, dass** das Reibelement (1) Seiten (3, 4, 5, 6, 7) enthält, die einen Hohlraum ausbilden, wobei dieser Hohlraum eine Befestigungsplatte vollständig oder teilweise aufnehmen kann.

9. Reibelement nach Anspruch 8, **dadurch gekennzeichnet, dass** das Reibelement (1) wenigstens eine Bohrung oder Aussparung (8) für die Aufnahme eines Stiftes oder Dorns enthält, um das Reibelement (1) an der Befestigungsplatte anzubringen.

## Revendications

1. Élément de frottement pour la fixation amovible de terminaux, comme des terminaux de paiement par exemple ou d'autres équipements électroniques, l'élément de frottement (1) comprenant sur sa face avant (6) une pluralité de lamelles (9), **caractérisé en ce que** la section en coupe des lamelles (9) diminue en direction des extrémités des lamelles (9) lorsque l'on regarde suivant une ligne (A-A), ladite ligne (A-A) s'étendant perpendiculairement à la longueur longitudinale des lamelles (9) et parallèlement à la face avant (6).

2. Élément de frottement selon la revendication 1, **caractérisé en ce que** la ligne (A-A) s'étend parallèlement à la ligne médiane (C) de l'élément tout entier, mais à une certaine distance par rapport à elle.

3. Élément de frottement selon la revendication 2, **caractérisé en ce que** la ligne (A-A) coïncide avec la ligne de moulage de l'élément de frottement (1).

4. Élément de frottement selon la revendication 1, **caractérisé en ce que** les côtés supérieur et inférieur (11, 12) des lamelles (9) sont sensiblement parallèles.

5. Élément de frottement selon la revendication 1 ou 4, **caractérisé en ce qu'**au moins un des côtés supérieur ou inférieur (11, 12) des lamelles (9) forme un angle obtus (Ω, Φ) avec la face avant (6).

6. Élément de frottement selon la revendication 5, **caractérisé en ce que** le côté inférieur (12) des lamelles (9) forme un angle aigu (Φ) avec la face avant (6).

7. Élément de frottement selon la revendication 6, **caractérisé en ce que** la transition entre la face avant (6) et le côté inférieur (12) des lamelles (9) est arrondie.

8. Élément de frottement selon les revendications 1 à 3, **caractérisé en ce que** l'élément de frottement (1) comprend des côtés (3, 4, 5, 6, 7) formant une cavité, ladite cavité pouvant recevoir une plaque de montage, en totalité ou en partie.

9. Élément de frottement selon la revendication 8, **caractérisé en ce que** l'élément de frottement (1) comprend un ou plusieurs alésages ou évidements (8) pour recevoir une broche ou des ardillons pour assurer la fixation de l'élément de frottement (1) à une plaque de montage.
